# EUROPEAN PATENT APPLICATION

(11) **EP 3 184 790 A1**
(43) Date of publication of application: **28.06.2017**
(21) Application number: 15201526.9
(22) Date of filing: 21.12.2015
(51) Int. Cl.: F02M 26/05, F02B 33/44, F02B 37/10, F02M 26/37

(54) **INTERNAL COMBUSTION ENGINE AND METHOD FOR OPERATING SUCH ENGINE**

(71) Applicant: ROBERT BOSCH GMBH, 70442 Stuttgart (DE)
(72) Inventor: Coppola, Gianvito, 70014 Conversano (IT); Mannal, Soenke, 70026 Modugno (Bari) (IT)

(57) **Abstract**

Internal combustion engine (100) and method for operating an internal combustion engine (100), comprising a fluid reservoir (110, 114) connectable to either an intake manifold (192) or an exhaust manifold (101) of the internal combustion engine (100), pumping means (102) for pumping a fluid, and regulating means (111, 130, 150, 160, 171) for directing or controlling the flow of the fluid, wherein the regulating means (111, 130, 150, 160, 171) is configurable to fill the fluid reservoir (110, 114) with fluid pumped by the pumping means (102), wherein the regulating means (111, 130, 150, 160, 171) is configurable to connect the reservoir (110, 114) to either the intake manifold (192) or the exhaust manifold (101) depending on an operating mode of the internal combustion engine (100) for releasing fluid from the reservoir (110, 114) into the intake manifold (192) and the exhaust manifold (101) respectively.

## Description

### Background

Pollutant emissions from internal combustion engines of motor vehicles are controlled to keep emission levels under predefined low thresholds. In highly transient driving conditions the control affects fuel consumption and drivability.

### Disclosure of the invention

As mentioned before, it is a requirement to keep emission levels under predefined low thresholds also in realistic driving conditions. One of the issues affecting engine transient response in terms of pollutant emissions is represented by aerodynamic inertia of the air path. Momentary lack of desired quantity of air inside cylinders causes the emission of peaks of pollutant gaseous species. This is accompanied by a lack of available torque that translates in a worsening of fuel consumptions, and a poorer driving enjoyment felt by the driver.

For turbocharged engines, dynamic characteristics of the turbo-machinery themselves play a key role too, enforcing therefore above mentioned inertial phenomena with a lack of boost pressure achieved at the intake of the engine during transient operations. This effect is commonly referred as "turbo-lag".

It is therefore a goal of the present invention to improve the control of pollutant emissions of an internal combustion engine in highly transient engine conditions while mitigating adverse effects on fuel consumption and drivability.

This goal is achieved by a device and a method according to the independent claims.

A corresponding internal combustion engine comprises a fluid reservoir connectable to either an intake manifold or an exhaust manifold of the internal combustion engine, pumping means for pumping a fluid, and regulating means for directing or controlling the flow of the fluid, wherein the regulating means is configurable to fill the fluid reservoir with fluid pumped by the pumping means, wherein the regulating means is configurable to connect the reservoir to either the intake manifold or the exhaust manifold depending on an operating mode of the internal combustion engine for releasing fluid from the reservoir into the intake manifold and the exhaust manifold respectively. This way exhaust gas or air pumped by the internal combustion engine is used to fill the fluid reservoir. By releasing fluid into the intake manifold or the exhaust manifold depending on the operating mode of the internal combustion engine, an enhancement of the air flow in the internal combustion engine is achieved. Therefore the combustion of the internal combustion engine is improved depending on the operating mode.

Preferably the internal combustion engine comprises an additional fluid reservoir fluidly connectable to the fluid reservoir via the regulating means. This way the capacity of the reservoir is controllable by the regulating means.

Preferably the regulating means is configurable to store fluid in the fluid reservoir depending on the operating mode. This way exhaust gas or air pumped by the internal combustion engine can be used at a later time.

Preferably the regulating means is arranged upstream of a turbine, and the regulating means is configurable to release fluid from the fluid reservoir to drive the turbine depending on the operating mode.

Accordingly, an enhancement of the air system of a turbocharged internal combustion engine is achieved. Therefore the "turbo-lag" effect is reduced.

Preferably the regulating means comprises the regulating means comprises a variable geometry turbine, an exhaust flap, or a fresh air inlet valve. Hence no additional components have to be added.

Preferably the internal combustion engine comprises a pressure sensor for monitoring a pressure in the fluid reservoir, and in that the regulating means is configured for filling the fluid reservoir with fluid, storing fluid in the fluid reservoir or releasing fluid from the fluid reservoir depending on the result of a comparison of the monitored pressure and a desired pressure. This way the control of the air system of the internal combustion engine is improved further.

Preferably the internal combustion engine is operable in a vehicle for filling the reservoir in an operating mode for vehicle coasting, vehicle deceleration or vehicle braking. In these driving situations the pumping of air by the engine has only little influence on the vehicle performance.

Preferably the internal combustion engine is operable in a vehicle for releasing fluid into the exhaust manifold in an operating mode for vehicle acceleration. Thereby the engine performance is improved significantly in this driving situation.

The invention concerns a corresponding method to operate the internal combustion engine in an operating mode in which the regulating means is configured to fill the fluid reservoir, store fluid in the fluid reservoir, release fluid from the fluid reservoir to drive a turbine or release fluid from the fluid reservoir to supply the fluid to the combustion chamber of the internal combustion engine. This way the corresponding improvements mentioned above are achieved.

Preferably the method comprises monitoring the pressure in the fluid reservoir, compare the monitored pressure and a desired pressure, and filling the fluid reservoir with fluid, storing fluid in the fluid reservoir or releasing fluid from the fluid reservoir depending on the result of the comparison. This way the above mentioned improvement of the control is achieved.

Other aspects of the invention will become apparent by consideration of the detailed description and accompanying drawings.

The invention will be described in more detail hereinafter with reference to examples of embodiment but to which the invention is not limited.
Fig. 1 shows an exhaust gas recirculation system having a high-pressure exhaust gas recirculation route and a low-pressure exhaust gas recirculation route,
Fig. 2 shows an exhaust gas recirculation system having a high-pressure exhaust gas recirculation route, a low-pressure exhaust gas recirculation route, and a fresh air inlet valve,
Fig. 3 shows an exhaust gas recirculation system having a high-pressure exhaust gas recirculation route, a low-pressure exhaust gas recirculation route and an additional volume in the high-pressure exhaust gas recirculation route.

In the following description elements depicted in the Figures that have the same or similar function are identified by the same reference sign.

An air system of a turbocharged internal combustion engine 100 can be equipped with a high-pressure exhaust gas recirculation route 110, referred to as HP-EGR-route. The air system of the turbocharged internal combustion engine can be equipped with a low-pressure exhaust gas recirculation route 120, referred to as LP-EGR-route.

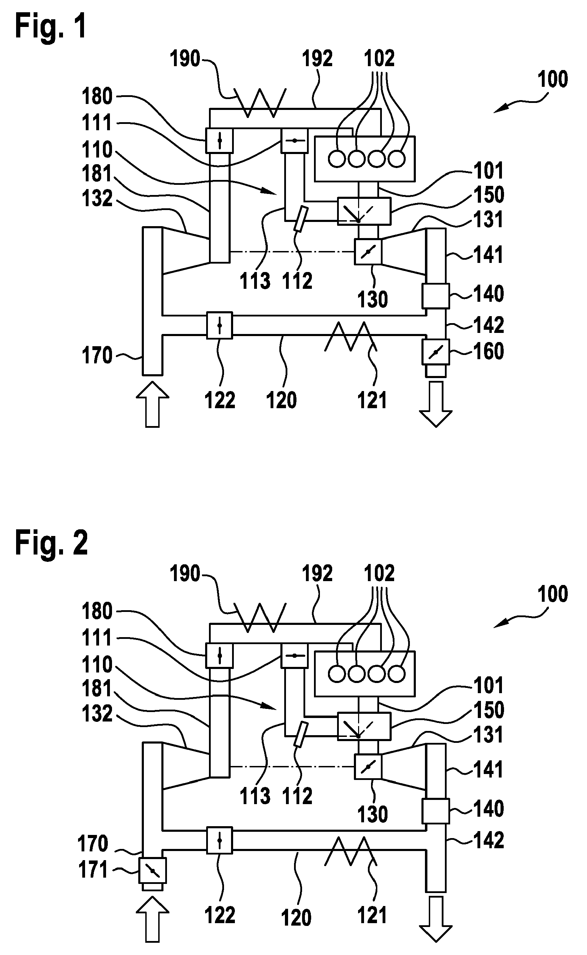

According to the example of figure 1, a turbocharged internal combustion multi-cylinder engine 100, is equipped with an EGR system having both High-Pressure route 110 and Low-Pressure EGR route 120.

The turbocharger comprises a variable geometry turbine 130. The variable geometry turbine 130 is referred to as turbine or VGT. A non-variable turbine may be used as well. The input of the variable geometry turbine 130 is connected by an exhaust manifold 101 of the turbocharged internal combustion multi-cylinder engine 100 via exhaust valves (not depicted) of the multi-cylinder engine 100 to the combustion chambers 101 of the internal combustion multi-cylinder engine 100.

Between the variable geometry turbine 130 and the exhaust valves, the exhaust manifold 101 comprises a valve 150, referred to as boost assist valve. The boost assist valve 150 is configured as a branch connection. Respective outputs of the boost assist valve 150 connect the exhaust manifold 101 and the HP-EGR valve 111. The input of the boost assist valve 150 connects to the variable geometry turbine 130.

The output 131 of the variable geometry turbine 130 is connected to an input of an exhaust gas treatment system 140, referred to as EGT system, via an exhaust pipe 141. The output of the EGT system 140 is connected to an input of an exhaust flap 160 and an input of a low pressure exhaust gas recirculation cooler 121, referred to as LP-EGR cooler, via a branch connection 142.

An output of the LP-EGR cooler 121 is connected to an input of a low pressure exhaust gas recirculation valve 122, referred to as LP-EGR valve. An output of the LP-EGR valve 122 and an air intake 170 are connected to the input at the low pressure side of a compressor 132. An output on the high pressure side of the compressor 132 is connected to an input of a throttle valve 180, referred to as TVA, via an intake pipe 181. Respective outputs of the TVA 180 and a high pressure exhaust gas recirculation valve 111, referred to as HP-EGR valve, connect to the combustion chambers via an intake manifold 192 and intake valves (not depicted).

The combustion chambers are within cylinders guiding movable pistons (not depicted). A cylinder and a corresponding piston form pumping means 102 in particular for pumping a fluid, preferably air, air fuel mixture, or exhaust gas. The corresponding input valves and output valves may be controlled to be closed essentially during an exhaust stroke and an intake stroke of the piston respectively and to open essentially during an intake stroke and an exhaust stroke of the piston respectively. This improves the pump performance of the pumping means 102 further.

Between the HP-EGR valve 111 and the TVA 180, the intake manifold 192 comprises an intercooler 190, referred to as IC.

An input of the HP-EGR valve 111 connects to the output of the boost assist valve 150.

This means that the LP-EGR route 120 comprises LP-EGR Valve 122, LP-EGR Cooler 121 and Exhaust Flap 160 and the pipes connecting them.

This means HP-route 110 comprises the HP-EGR Valve 111 and the pipe 113 connecting to the boost assist valve 150.

The HP-route 110 may comprise additional components. A pressure sensor 112 may be inserted in the HP-route 110, in particular between the HP-EGR valve 111 and the boost assist valve 150.

The HP-route 110 may comprise the HP-EGR cooler with a bypass valve (not drawn in Fig. 1), for bypassing the HP-EGR cooler on the HP-route 110.

Preferably an electronic control unit, referred to as ECU, (not depicted) coordinates the functionality of the EGR system. The corresponding wiring harness is not depicted. The ECU is adapted to detect or receive via a network connection an operating mode of the internal combustion engine, e.g. coasting, braking, drive. The ECU is adapted to actuate the valves and the turbine 130 or send via the network signals to actuate them according to a corresponding method, described below. The network may be a wiring harness, controller area network or other bus system.

A turbo-lag effect occurs in particular during engine accelerations that are subsequent to vehicle deceleration phases. This situation is referred to as tip-in phase.

The modification of the HP-route 110 is realized by installing a properly designed boost assist valve 150 at the open end of the HP-route 110.

The modification comprises a temporary creation of a confined volume in the HP-route 110, during vehicle deceleration phases, i.e. coasting or braking.

This volume is to be filled during vehicle decelerations with compressed air, produced by the engine. The air is compressed when the piston moves upward, reducing the combustion chamber volume. The volume is filled as follows:
During vehicle deceleration phases, e.g. braking or coasting, when the engine is operated in motored conditions, i.e. without combustion, the HP-EGR valve 111 is closed, possibly after a short opening phase to clear the HP-route 110 from exhaust gases. The boost assist valve 150 is kept initially wide open with respect to the branch to the HP-route 110. Then, an overpressure upstream the VGT 130, e.g. in the exhaust manifold, is created by closing the VGT 130 and the exhaust flap 160, until a desired pressure in the HP-route 110 is achieved.

Preferably the desired pressure is essentially the same pressure as the exhaust pressure created by the internal combustion engine during combustion. Preferably the desired pressure exceeds the current intake manifold pressure or the current atmospheric pressure.

As mentioned before, pressure sensor 112 might be used to monitor this quantity. In this case the ECU may be adapted to receive corresponding signals from the pressure sensor 112.

When the desired pressure value is achieved, i.e. the desired amount of air mass is stored; the boost-assist-valve 150 is closed with respect to the branch to the HP-route 110, converting in this way HP-route 110 in a temporary reservoir of compressed air.

The energy recovered in this way during vehicle deceleration in form of compressed air is used in the following acceleration phase of the vehicle to temporarily increase mass flow through turbine 130 by opening the boost assist valve 150 with respect to the branch to the HP-route 110 while the HP-EGR valve 111 remains closed. This is referred to as boost assist operation.

The HP-EGR valve 111, the turbine 130, the boost assist valve 150, the exhaust flap 160, the fresh air inlet valve 171 or the throttle valve 180 are regulating means for directing or controlling the flow of the fluid. In particular air flow in the internal combustion engine 100 is regulated. For example the ECU actuates the regulating means according to the requirements of the operating modes.

This means that the internal combustion engine in boost assist operation:
- operates, preferably during the vehicle coasting, decelerating or braking, in a first operating mode in which the HP-EGR valve 111 is closed and the valve 150 is at least partially open, to fill the reservoir with compressed air. The valve 150 is preferably fully open with respect to the branch to the HP-route 110 in this first operating mode. The reservoir is the pipes of HP-route 110. In this operating mode the EGR-flap 160 or the VGT 130 may be partially or preferably entirely closed as well;
- operates, preferably when a desired pressure build in the reservoir is achieved, or after a predetermined time has lapsed after operation in the first operating mode, in a second operating mode in which the HP-EGR valve 111 is closed and the valve 150 is closed with respect to the branch to the HP-route 110, to conserve compressed air in the reservoir;
- operates, preferably when the vehicle accelerates after operating in either the first or the second operating mode, in a third operating mode in which the HP-EGR valve 111 is closed and the valve 150 is at least partially open with respect to the branch to the HP-route 110. This way the compressed air leaves through the VTG 130 driving the compressor 132 and reduces turbo-lag;
- optionally operates, preferably after a stop in a start/stop mode, in a fourth operating mode in which the HP-EGR valve 111 is at least partially open and the valve 150 is closed with respect to the branch to the HP-route 110. This way the start operation after a stop is improved by providing higher air pressure to the intake manifold 192.

This boost assist operation of the EGR system assists the turbocharger transient operation, by improving boost pressure dynamics as well as reducing time interval needed to achieve desired boost pressure at the intake of the engine. This results in the reduction of the turbo-lag effect.

The effect on combustion engine performances in transient operation provides thereby faster dynamics for both boost pressure and LP-EGR mass flow. This is smoothing pollutant emissions peaks during engine accelerations from motored conditions, improving fuel consumptions and drivability at the same time.

As long as the EGR system is operated in the boost assist operation mode described above, HP-EGR is prevented, because the HP-EGR valve 111 is fully closed.

This means that according to the invention the benefits on pollutant emissions that were achieved due to HP-EGR are achieved by the boost assist operation of the EGR system.

In case the vehicle deceleration phase is followed by a rest phase and the vehicle is equipped with Start/Stop System, i.e. engine stopped with vehicle in rest, the compressed air stored in the reservoir volume can be used to assist the starter in the following engine start phase, opening in this case the HP-EGR valve 111 and keeping closed the boost assist valve 150, so that the resulting overpressure in the intake manifold 192 contributes to push the pistons down.

It is important to highlight that the magnitude of turbo-lag reduction achieved is directly proportional either to the overpressure upstream the VGT 130, created during vehicle deceleration phase, and to the extent of the volume available to store compressed air.

Preferably, in applications in which a necessity to increase overpressure arises, the design of the boost assist valve 150 is adapted to realize, by means of the valve itself, an additional throttling upstream the VGT 130.

This would be the case, for example, of a LP-EGR Systems without exhaust flap 160, e.g. a layout in which exhaust flap 160 is replaced by a fresh air inlet valve 171 on low-pressure fresh air side, as shown in Figure 2.

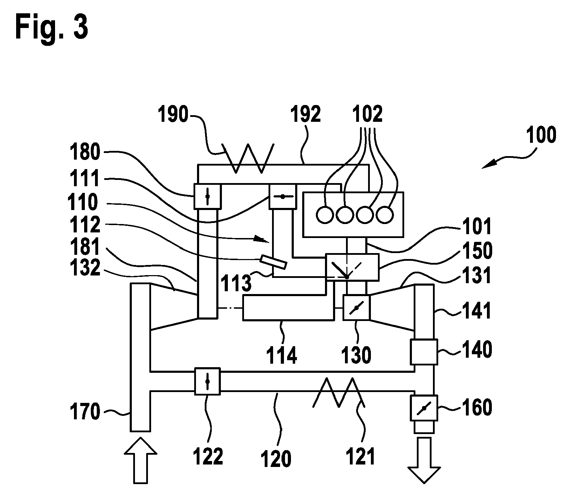

Preferably, in applications in which a necessity to increase the extent of the volume available to store compressed air arises, the implementation on the HP-EGR pipe 113 is adapted to comprise an additional volume 114 to increase the system storage capacity, as shown in Figure 3.

The additional volume 114 may be thermally insulated.

Preferably the boost assist valve 150 is designed to allow compressed air storage during vehicle deceleration and boost assist operation, during vehicle acceleration, as well as normal HP-EGR operation or during all other conditions. Preferably the boost assist valve 150 is designed to allow a further throttling of the flow upstream the VGT 130, in order to increase the overpressure during vehicle decelerations.

For those applications in which the HP-EGR is not needed for other reasons, the HP-EGR valve 111 can be replaced by a closed end of the HP-route 110.

## Claims

1. Internal combustion engine (100), **characterized by** a fluid reservoir (110, 114) connectable to either an intake manifold (192) or an exhaust manifold (101) of the internal combustion engine (100), pumping means (102) for pumping a fluid, and regulating means (111, 130, 150, 160, 171, 180) for directing or controlling the flow of the fluid, wherein the regulating means (111, 130, 150, 160, 171, 180) is configurable to fill the fluid reservoir (110, 114) with fluid pumped by the pumping means (102), wherein the regulating means (111, 130, 150, 160, 171, 180) is configurable to connect the reservoir (110, 114) to either the intake manifold (192) or the exhaust manifold (101) depending on an operating mode of the internal combustion engine (100) for releasing fluid from the reservoir (110, 114) into the intake manifold (192) or the exhaust manifold (101) respectively.

2. internal combustion engine (100) according to claim 1, **characterized by** an additional fluid reservoir (114) fluidly connectable to the fluid reservoir (110) via the regulating means (150) depending on the operating mode.

3. The internal combustion engine (100) according to any of the aforementioned claims, **characterized in that** the regulating means (111, 130, 150, 160, 171, 180) is configurable to store fluid in the fluid reservoir (110, 114) depending on the operating mode.

4. The internal combustion engine (100) according to any of the aforementioned claims, **characterized in that** the fluid reservoir (110, 114) is arranged upstream of a turbine (130), and the regulating means (111, 130, 150, 160, 171) is configurable to release fluid from the fluid reservoir (110, 114) to drive the turbine (130) depending on the operating mode.

5. The internal combustion engine (100) according to any of the aforementioned claims, **characterized in that** the regulating means (111, 130,150, 160, 171, 180) comprises a variable geometry turbine (130), an exhaust flap (160), a fresh air inlet valve (171) or a throttle valve (180).

6. The internal combustion engine (100) according to any of claims 1 to 6, **characterized by** a pressure sensor (112) for monitoring a pressure in the fluid reservoir (110, 114), and in that the regulating means (111, 130, 150, 160, 171, 180) is configured for filling the fluid reservoir (110, 114) with fluid, storing fluid in the fluid reservoir (110, 114) or releasing fluid from the fluid reservoir (110, 114) depending on the result of a comparison of the monitored pressure and a desired pressure.

7. The internal combustion engine (100) according to any of the aforementioned claims, wherein the internal combustion engine (100) is operable in a vehicle for filling the reservoir (110, 114) in an operating mode for vehicle coasting, vehicle deceleration or vehicle braking.

8. The internal combustion engine (100) according to any of the aforementioned claims, wherein the internal combustion engine (100) is operable in a vehicle for releasing fluid into the exhaust manifold (101) in an operating mode for vehicle acceleration.

9. The internal combustion engine (100) according to any of the aforementioned claims, wherein the internal combustion engine (100) is operable in a vehicle for releasing fluid into the intake manifold (192) in an operating mode for vehicle start.

10. Method for operating an internal combustion engine (100), comprising pumping means (102) for pumping a fluid and a fluid reservoir (110, 114) connectable to either an intake manifold (192) or an exhaust manifold (101) of the internal combustion engine (100), **characterized by** regulating means (111, 130, 150, 160, 171, 180) directing or controlling the flow of the fluid depending on an operating mode of the internal combustion engine (100) to fill the fluid reservoir (110, 114) with fluid pumped by the pumping means (102) and to fluidly connect the reservoir (110, 114) to either the intake manifold (192) or the exhaust manifold (101) for releasing fluid from the reservoir (110, 114) into the intake manifold (192) or the exhaust manifold (101) respectively.

11. The method according to claim 10, **characterized by** connecting an additional fluid reservoir (114) fluidly to the fluid reservoir (110) via the regulating means (150) depending on the operating mode.

12. The method according to claim 10 or 11, **characterized by** operating the internal combustion engine (100) in an operating mode in which the regulating means (111, 130, 150, 160, 171) is configured to store fluid in the fluid reservoir (110, 114) depending on the operating mode.

13. The method according to any of claims 10 to 12, wherein the fluid reservoir (110, 114) is arranged upstream of a turbine (130), **characterized by** releasing fluid from the fluid reservoir (110, 114) to drive the turbine (130) in a corresponding operating mode.

14. The method according to any of claims 10 to 13, **characterized by** actuating a variable geometry turbine (130), an exhaust flap (160), a fresh air inlet valve (171) or a throttle valve (180) as regulating means.

15. The method according to any of claims 10 to 14, **characterized by** monitoring a pressure in the fluid reservoir (110, 114), comparing the monitored pressure and a desired pressure, and by filling the fluid reservoir (110, 114) with fluid, storing fluid in the fluid reservoir (110, 114), or releasing fluid from the fluid reservoir (110, 114) depending on the result of the comparison.

16. The method according to any of claims 10 to 15, wherein the internal combustion engine (100) operates in a vehicle for filling the reservoir (110, 114) in an operating mode for vehicle coasting, vehicle deceleration or vehicle braking.

17. The method according to any of claims 10 to 16, wherein the internal combustion engine (100) operates in a vehicle for releasing fluid into the exhaust manifold (101) in an operating mode for vehicle acceleration.

18. The method according to any of claims 10 to 17, wherein the internal combustion engine (100) operates in a vehicle for releasing fluid into the intake manifold (192) in an operating mode for vehicle start.
